# EUROPEAN PATENT SPECIFICATION

(11) **EP 1 712 457 B1**
(45) Date of publication and mention of the grant of the patent: **15.08.2007**
(21) Application number: 05007978.9
(22) Date of filing: 12.04.2005
(51) Int. Cl.: B62J 9/00, B62J 1/16

(54) **Side bag**
Fahrradtasche
Sacoche de vélo

(43) Date of publication of application: 18.10.2006
(73) Proprietor: HAMAX AS, 1670 Krakeroy (NO)
(72) Inventor: Hoidal, Dag, 1675 Krakeroy (NO); Bouwknegt, Janwillem, 2317 KA Leiden (NL)
(74) Representative: Popp, Eugen

(56) References cited:
- US-A- 4 460 114

## Description

This invention relates generally to the field of carriers which are attached to bicycles, and in particular to carrying bags which can be integrated with such carriers for increasing the carrying capabilities.

### Background to the invention:

Carriers for attaching to cycles are well known in the art, as they provide a simple way of allowing a rider of the bicycle to transport items supported by the frame of the bike, rather than having to hold or carry them. In addition to providing a simple carrier, there are further systems which allow bags and other carrying units to be attached to the carrier, so as to increase the amount of luggage that can be conveyed. It is preferable for these bags and the like, to be constructed with rigid shells as this will protect the contents of the bags from any knocks whilst travelling. The document US 4460114 describes a side bag according to the preamble of claim 1.

A problem which exists with the attachment of bags to the carrier, however, is when one attempts to incorporate a child's seat with the carrier. Many child seats are provided with leg supports for the child, which extend downward from the seat region, and can interfere with the positioning of the bags. Even for seats where no such leg supports are provided, the legs of the seated child will still tend to extend into regions where they interfere with the attachment of the bags. An object of the current invention, therefore, is the provision of a rigid shell side bag which can be attached to a carrier on a bicycle, but which can also be used when a child's seat is incorporated with the carrier. Such a bag, is required to have the largest volume when no seat is attached, but to then allow the positioning of a seat onto the carrier without having to remove the bag.

### Summary of the Invention.

The above problems are solved by the side bags for attachment to a carrier on a bicycle, as recited in claim 1, with preferred embodiments discussed in the dependent claims thereof.

The side bags comprise: a rigid outer shell which defines a bag interior. One of the corners of the rigid shell, however, is replaced by a collapsible corner, which is made from a flexible and foldable material.

### Brief Description of Figures.

**Figure 1:** A perspective view of the side bag attached to a carrier for mounting to a bicycle.
**Figure 2:** A side view of the side bag, which shows the positioning of a child's seat within the carrier system.

### Detailed description of one way of implementing the invention.

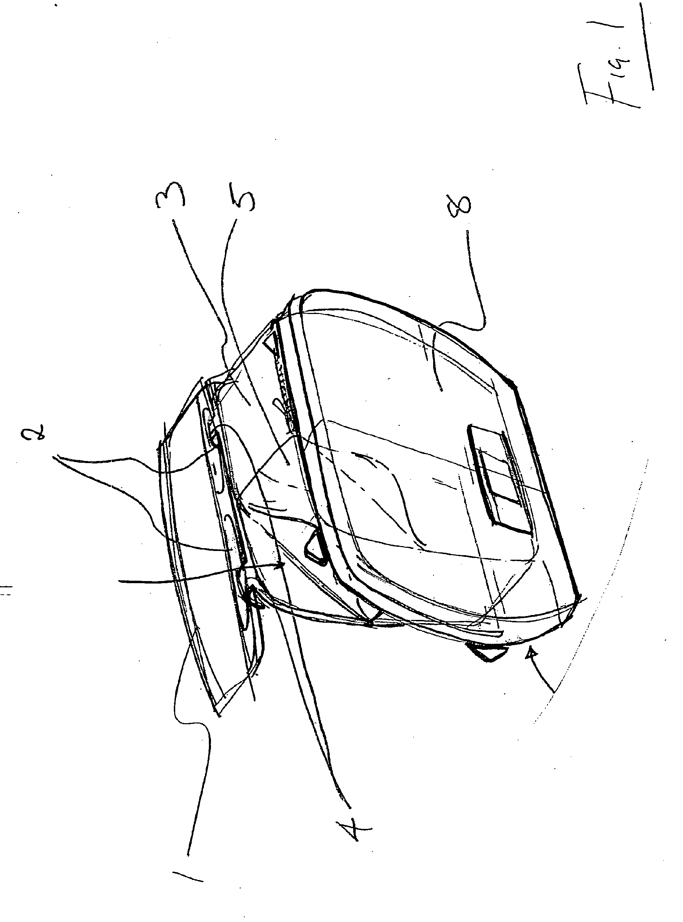

As can be seen in figure 1, a carrier (1) for attachment over the rear wheel of a bicycle is provided, as is well known in the art. Such carriers (1) generally comprise slots or holes (2) in their top or sides so that items of luggage can be attached by means of straps, string or the like. Shown in figure 1, is a side bag (3) of the current invention, which is illustrated as integrating with the holes (2) provided in the carrier (1). In this particular embodiment, the carrier (1) and side bag (3) are interconnected by means of hooks (4) provided on one side of the side bag (3). These hooks (4) slot into specific slots (2) provided on the carrier (1), so as to secure the side bag (3) in place. Clearly, other fixing mechanisms exist, such as straps which pass through the holes or slots (2) in the carrier (1), and the above is shown by way of example only. For clarity, only one side bag (3) is shown to one side of the carrier (1); of course, a further side bag (3) could readily be attached to the other side of the carrier (1). Additionally, whilst the carrier (1) and bag (3) are shown for attachment over the rear wheel of a cycle, it is to be understood that the current invention could be equally well applied to a carrier over the front wheel. For clarity of discussion, however, only discussion of a rear wheel mounted carrier is presented herein.

The side bag (3) is, generally, made from a rigid hard shell of plastic or the like to form a secure and sturdy carrying unit. This is particularly advantageous, as when cycling it is possible for the bag to knock into structures at the side of the cycle path, which could lead to damage to the items in the bag (3) were it possessed of a soft outer shell. As a further alternative to this, it is possible to provide a sturdy internal structure, which is covered by a preferably waterproof and rip-resistant material, such as Neoprene. This design allows for more straightforward access to the inside of the bag (3), as the access panel can be made attachable to the main bag (3) through this covering material, without the need for a more complex hinging arrangement. Certain problems are associated, however, with providing a side bag (3) with a rigid shell, when a cyclist wishes to incorporate the bag (3) within a carrier system which comprises further components. Particular difficulties are associated with providing a child's seat for attachment to the carrier (1), as the top of the side bag (3) will tend to interfere with the child's legs or, if provided, the leg supports of the seat.

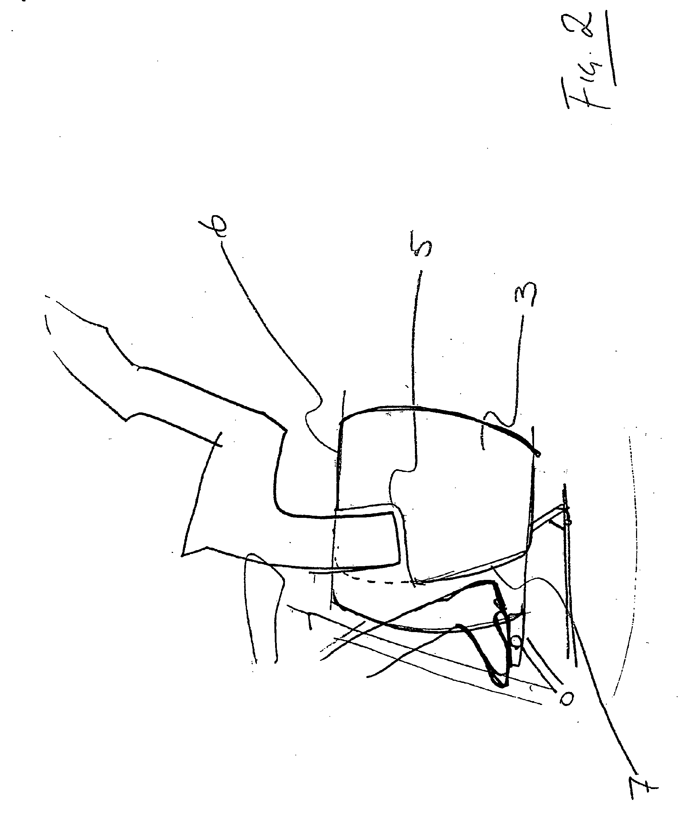

In order to provide both a rigid shell side bag (3), in addition to one which can be used with a child's seat, the current invention includes a bag which has a collapsible corner (5). As can be seen in figure 1 and in the side image of figure 2, the top front corner of the bag (3) is fabricated from a flexible and foldable material, for example the Neoprene which could be used to cover an internal rigid bag structure. This collapsible corner (5) is so provided to give maximum space to the bag (3) when no child's seat is included, but also to allow the greatest flexibility to the carrying system by readily allowing one to be integrated. The foldable material is shaped into a three dimensional pocket, which has an approximately isosceles triangular cross section and follows the outline of the corner of the side bag (3). Two triangles of material with this cross section are provided, and between the two identical sides of each triangle there extends a further strip of the material joining the two triangles together to form the pocket. The resulting pocket of material is then attached at the opening portion to both the top (6) and front (7) sides of the bag (3), with the other two parts of the opening connected to the inner sides of the bag's (3) rigid side panels. In this manner, it is possible for the pocket to be opened outward so that the bag (3) has the maximum internal volume, and additionally when a child's seat is integrated with the carrier (1) the pocket can be folded in, to accommodate the seat's leg supports or at least provide the child with somewhere to place its legs. Whilst the front corner of the side bag (3) is shown with a collapsible corner (5), it is clear that this structure could readily be applied to the rear corner of the bag (3) should the child's seat be designed to face the other way.

As can be seen from figure 2, the size of the side bag (3) is somewhat limited in that it is necessary to allow the rider of the bike enough room to actually pedal without striking the bag (3) with his/her foot. This requirement, therefore, somewhat limits the maximum size of an item that can be carried. Such a difficulty can be overcome, however, by provision of a second side bag (8) which has a larger size and which is fitted to the outside side panel of the first side bag (3). The second bag (8) shown in figure 1, is designed for carrying a laptop computer, and is therefore quite narrow so as to stop the computer from moving around inside the bag (8) during transit. Clearly, however, a wider bag could be provided for the carriage of bulkier items if required by the cyclist. The key requirement is that the width of the side bag (3) is such, that when the cyclist is pedalling his/her feet have enough room between the larger second side bag (8) and the frame of the cycle.

Numerous possible methods exist for attachment of the second bag (8) to the first (3); shown in figure 1, is a zip which extends around the perimeter of the first bag (3) and attaches to a matching portion on the second bag (8). This is a particularly appropriate technique if the bags (3, 8) are provided by rigid structures surrounded by rip-resistant material. Other techniques for fastening the second bag (8) exist, such as the use of straps integrating with eyelets provided at appropriate points on the bag (3). Furthermore, the bag (3) is not limited to the attachment of just a second bag (8), but could accommodate more. Further, it is possible to provide additional attachment points for other carrying items to be affixed, these could be in the form of eyelets for threading of straps through which are attached to such items.

## Claims

1. A side bag (3) for attachment to a carrier (1) provided on a bicycle, the side bag (3) comprising:
a rigid outer shell defining a bag interior, **characterised in that** one of the corners of the otherwise rigid shell is collapsible (5), made from a flexible and foldable material.

2. The side bag (3) of claim 1, wherein the collapsible corner (5) is shaped and sized to accept the leg supports of a child's seat additionally attached to the carrier (1).

3. The side bag (3) of claim 1, wherein the collapsible corner (5) is shaped and sized to accept the legs of a child, who is positioned in a child's seat additionally attached to the carrier (1).

4. The side bag (3) of any of the preceding claims, wherein the collapsible corner (5) is fabricated from foldable material which is shaped into a three dimensional pocket having an approximately isosceles triangular cross section following the outline of the corner of the side bag (3), wherein
two triangles of material with this cross section are provided, and between the two identical sides of each triangle there extends a further strip of the foldable material joining the two triangles together to form the pocket, the resulting pocket of material is then attached at the opening portion to both a top (6) and front (7) sides of the bag (3), with the other two parts of the opening connected to the inner sides of the bag's (3) rigid side panels.

5. The side bag (3) of any of the preceding claims, wherein the rigid shell is provided by a plastic structure, which is surrounded by a waterproof and rip-proof material cover.

6. The side bag (3) of claim 5, wherein the surrounding material is Neoprene, and the collapsible corner (5) is further made from this material and is fully integrated with the outer cover.

7. The side bag (3) of any of the preceding claims, wherein the side bag (3) is further shaped and sized so as not to interfere with a cyclist's legs or feet whilst pedalling.

8. The side bag (3) of any of the preceding claims, further comprising attachment points for the connection of additional bags (8) or carrying items.

9. The side bag (3) of any of the preceding claims, wherein the width of the side bag (3) is chosen so that a larger second bag (8) can be attached and sufficient space is left between the second bag (8) and the frame of the cycle to allow the cyclist to pedal freely.

10. The side bag (3) of claim 9, wherein the second bag (8) is specifically sized and shaped for carrying a laptop computer.

## Patentansprüche

1. Seitentasche (3) zur Anbringung an einem Träger (1), der an einem Fahrrad vorgesehen ist, wobei die Seitentasche (3) umfasst:
eine starre Außenschale, die einen Tascheninnenraum bildet, **dadurch gekennzeichnet, dass** eine der Ecken der ansonsten starren Schale zusammenklappbar (5) ist und aus einem flexiblen und faltbaren Material besteht.

2. Seitentasche (3) nach Anspruch 1, wobei die zusammenklappbare Ecke (5) so geformt und bemessen ist, dass sie die Fußstützen eines zusätzlich am Träger (1) angebrachten Kindersitzes aufnimmt.

3. Seitentasche (3) nach Anspruch 1, wobei die zusammenklappbare Ecke (5) so geformt und bemessen ist, dass sie die Beine eines Kindes aufnimmt, das sich in einem zusätzlich am Träger (1) angebrachten Kindersitz befindet.

4. Seitentasche (3) nach einem der vorhergehenden Ansprüche, wobei die zusammenklappbare Ecke (5) aus einem faltbaren Material hergestellt ist, das zu einer dreidimensionalen Tasche mit einem ungefähr gleichschenklig dreieckigen Querschnitt geformt ist, welcher der Umrisslinie der Ecke der Seitentasche (3) folgt, wobei
zwei Materialdreiecke mit diesem Querschnitt vorgesehen sind, und sich zwischen den beiden identischen Seiten jedes Dreiecks ein weiterer Streifen aus dem faltbaren Material erstreckt, der die beiden Dreiecke miteinander verbindet, um die Tasche zu bilden, und die sich ergebende Materialtasche dann am Öffnungsabschnitt sowohl einer Oberseite (6) als auch einer Vorderseite (7) der Tasche (3) befestigt wird, wobei die anderen beiden Teile der Öffnung an den Innenseiten der starren Seitenfelder der Tasche (3) angeschlossen sind.

5. Seitentasche (3) nach einem der vorhergehenden Ansprüche, wobei die starre Schale durch einen Kunststoffaufbau bereitgestellt ist, der von einer wasserdichten und reißfesten Materialabdeckung umgeben ist.

6. Seitentasche (3) nach Anspruch 5, wobei das umgebende Material Neopren ist und die zusammenklappbare Ecke (5) darüber hinaus aus diesem Material hergestellt und voll in die Außenabdeckung integriert ist.

7. Seitentasche (3) nach einem der vorhergehenden Ansprüche, wobei die Seitentasche (3) darüber hinaus so geformt und bemessen ist, dass sie den Beinen oder Füßen eines in die Pedale tretenden Radfahrers nicht im Weg ist.

8. Seitentasche (3) nach einem der vorhergehenden Ansprüche, darüber hinaus Befestigungspunkte zum Anschließen zusätzlicher Taschen (8) oder Tragelemente umfassend.

9. Seitentasche (3) nach einem der vorhergehenden Ansprüche, wobei die Breite der Seitentasche (3) so gewählt ist, dass eine größere zweite Tasche (8) angebracht werden kann und zwischen der zweiten Tasche (8) und dem Rahmen des Fahrrads genügend Platz frei bleibt, damit der Fahrradfahrer frei in die Pedale treten kann.

10. Seitentasche (3) nach Anspruch 9, wobei die zweite Tasche (8) speziell bemessen und geformt ist, um einen Laptop-Computer zu transportieren.

## Revendications

1. Sacoche latérale (3) destinée à être fixée sur un support (1) agencé sur une bicyclette, la sacoche latérale (3) comportant :
une enveloppe extérieure rigide définissant un intérieur de sacoche, **caractérisée en ce qu'**un des coins (5) de l'enveloppe sinon rigide peut être aplati, réalisé à partir d'un matériau souple et pliable.

2. Sacoche latérale (3) selon la revendication 1, dans laquelle le coin pouvant être aplati (5) est mis en forme et dimensionné pour accepter les supports de jambe d'un siège enfant fixé de manière supplémentaire sur le support (1).

3. Sacoche latérale (3) selon la revendication 1, dans laquelle le coin pouvant être aplati (5) est mis en forme et dimensionné pour accepter les jambes d'un enfant qui est positionné dans un siège enfant fixé de manière supplémentaire sur le support (1).

4. Sacoche latérale (3) selon l'une quelconque des revendications précédentes, dans laquelle le coin pouvant être aplati (5) est fabriqué à partir d'un matériau pliable qui est mis en forme en une sacoche tridimensionnelle ayant une coupe transversale approximativement en triangle isocèle suivant le contour du coin de la sacoche latérale (3), dans laquelle
deux triangles d'un matériau ayant cette coupe transversale sont fournis, et entre les deux côtés identiques de chaque triangle s'étend une bande supplémentaire du matériau pliable reliant les deux triangles ensemble pour former la poche, la poche de matériau résultante est ensuite fixée au niveau de la partie d'ouverture sur les côtés supérieur (6) et avant (7) de la sacoche (3), les deux autres parties de l'ouverture étant reliées aux côtés intérieurs des panneaux latéraux rigides de la sacoche (3).

5. Sacoche latérale (3) selon l'une quelconque des revendications précédentes, dans laquelle l'enveloppe rigide est munie d'une structure en matière plastique, qui est entourée par un recouvrement en matériau étanche à l'eau et antidéchirement.

6. Sacoche latérale (3) selon la revendication 5, dans laquelle le matériau entourant est du Néoprène (nom commercial déposé), et le coin pouvant être aplati (5) est en outre réalisé à partir de ce matériau, et est complètement intégré avec le recouvrement extérieur.

7. Sacoche latérale (3) selon l'une quelconque des revendications précédentes, dans laquelle la sacoche latérale (3) est en outre mise en forme et dimensionnée de manière à ne pas interférer avec les jambes ou les pieds d'un cycliste tandis qu'il pédale.

8. Sacoche latérale (3) selon l'une quelconque des revendications précédentes, comportant en outre des points de fixation pour la connexion de sacoches supplémentaires (8) ou le transport d'articles.

9. Sacoche latérale (3) selon l'une quelconque des revendications précédentes, dans laquelle la largeur de la sacoche latérale (3) est choisie de sorte qu'une seconde sacoche plus grande (8) peut être fixée, et un espace suffisant est laissé entre la seconde sacoche (8) et le cadre du cycle pour permettre au cycliste de pédaler librement.

10. Sacoche latérale (3) selon la revendication 9, dans laquelle la seconde sacoche (8) est spécifiquement dimensionnée et mise en forme pour porter un ordinateur portable.
